# EUROPÄISCHE PATENTSCHRIFT

(11) **EP 3 003 201 B1**
(45) Veröffentlichungstag und Bekanntmachung des Hinweises auf die Patenterteilung: **21.09.2016**
(21) Anmeldenummer: 14725978.2
(22) Anmeldetag: 14.05.2014
(51) Int. Cl.: A61C 7/00, A61C 7/14

(54) **VERFAHREN ZUR HERSTELLUNG EINES PATIENTENSPEZIFISCHEN ERSATZBRACKETS FÜR EINE KIEFERORTHOPÄDISCHE BEHANDLUNG**
METHOD FOR PRODUCING A PATIENT-SPECIFIC REPLACEMENT BRACKET FOR AN ORTHODONTIC TREATMENT
PROCÉDÉ DE FABRICATION D'UN ATTACHEMENT ORTHODONTIQUE DE REMPLACEMENT SPÉCIFIQUE AU PATIENT POUR UN TRAITEMENT D'ORTHOPÉDIE MAXILLAIRE

(30) Priorität: 24.05.2013 DE 102013209735
(43) Veröffentlichungstag der Anmeldung: 13.04.2016
(73) Patentinhaber: DW LINGUAL SYSTEMS GMBH, 49152 Bad Essen (DE)
(72) Erfinder: WIECHMANN, Dirk, 49152 Bad Essen (DE)
(74) Vertreter: Taruttis, Stefan Georg
(86) Internationale Anmeldenummer: PCT/EP2014/059897
(87) Internationale Veröffentlichungsnummer: WO 2014/187715

(56) Entgegenhaltungen:
- WO-A2-01/85047
- US-A- 6 015 289
- US-A1- 2003 152 884
- US-A1- 2009 017 410

## Beschreibung

Die Erfindung betrifft ein Verfahren zum Herstellen eines patientenspezifischen Ersatzbrackets für eine kieferorthopädische Behandlung, wie in Anspruch 1 definiert.

Für die kieferorthopädische Behandlung von Patienten mit festsitzenden Klammern werden Brackets auf die zu behandelnden Zähne des Patienten geklebt und durch einen kieferorthopädischen Draht miteinander verbunden. Die Brackets weisen ein Pad zur Verbindung mit dem Zahn und einen Bracketbody mit einem Slot auf, der den Draht aufnimmt.

Bevorzugt werden für die kieferorthopädische Behandlung Brackets verwendet, die ein individualisiertes Pad haben, d.h. das Pad des Brackets weist eine Klebefläche zur Verbindung mit dem Zahn auf, die an den jeweiligen Zahn angepasst ist, so dass das Bracket in einer bestimmten Lage formschlüssig auf den Zahn gesetzt werden kann.

Im Laufe der Behandlung kann es vorkommen, dass sich ein Bracket von seinem Zahn löst und es daher ersetzt werden muss.

In einem solchen Fall wird typischerweise an Hand des vorhandenen Ziel-Set-Ups aus Gips ein vollständig individualisiertes Ersatzbracket hergestellt. Das Verfahren gestaltet sich in der Praxis insbesondere dadurch aufwändig, dass das bereits vorhandene Ziel-Set-Up in der Regel erst in eine Technikerwerkstatt gesandt werden muss und dort dann das Ersatzbracket hergestellt und zurück gesandt werden muss.

Ein Nachteil bei der Herstellung eines vollständig individualisierten Ersatzbrackets ist, dass das Verfahren aufwändig ist, insbesondere Gipsmodelle von Set-Ups versandt werden müssen.

Die US 6,015,289 A beschreibt ein vollautomatisches Verfahren zur Herstellung von Brackets nach einer digitalen Dentition eines Patienten.

Die WO 01/85047 A2 beschreibt ein Verfahren und eine Vorrichtung zum Positionieren eines Brackets an einem Zahn mit Hilfe eines digitalen Modells des Brackets auf einem digitalen Modell des Zahns.

Die US 2009/0017410 A1 beschreibt ein Verfahren zur Herstellung von Brackets nach einem digitalen Modell der Dentition eines Patienten, bei dem im Computer digitale Daten erzeugt werden, die ein angepasstes Bracket darstellen, mit anschließender Herstellung des Brackets nach den digitalen Daten.

Aufgabe der vorliegenden Erfindung ist es daher, ein einfacheres und kostengünstigeres Verfahren zur Herstellung eines vollständig individualisierten Ersatzbrackets anzugeben.

Die Aufgabe wird erfindungsgemäß durch ein Verfahren mit den Merkmalen des Anspruchs 1 gelöst.

Vorteilhaft umfasst der Schritt 1a): 2a) Erstellen eines patientenspezifischen Ziel-Set-Ups des Ober- oder Unterkiefers eines Patienten, 2b) Bestimmen einer Slotebene von auf zu behandelnden Zähnen des Ober- oder Unterkiefers anzuordnenden Brackets, 2c) Anordnen von Brackets auf den zu behandelnden Zähnen des Ober- oder Unterkiefers, 2d) Bestimmen der Referenzebene in dem Ziel-Set-Up relativ zu der Slotebene, 2e) Entfernen der Brackets von dem Ziel-Set-Up und 2f) elektronische Speicherung des Ziel-Set-Ups, einschließlich der Referenzebene.

Bevorzugt wird der Schritt 2a) an Hand eines Gipsmodells oder an Hand eines virtuellen Modells des Ober- oder Unterkiefers durchgeführt.

Der Schritt 2d) kann vor dem Schritt 2c) durchgeführt werden.

Im Schritt 2f) erfolgt die elektronische Speicherung bevorzugt durch Scannen eines physikalischen Ziel-Set-Ups oder durch Abspeichern eines digitalen Ziel-Set-Ups.

Im Schritt 1f) kann als Bracketelement ein Lingual- oder Bukkalbracketelement bereitgestellt werden, um als Ersatzbracket ein Lingualbracket oder ein Bukkalbracket herzustellen.

Die Referenzebene im Schritt 1a) kann kontinuierlich, bspw. durch eine Linie, oder intermittierend, bspw. durch Strichpunkte an ausgewählten Zähnen, dargestellt werden.

Die Referenzebene im Schritt 1a) kann für alle Zähne gleich definiert werden, bspw. von 18 bis 28, oder für einen ausgewählten Bereich definiert werden, bspw. von 13 bis 23, und für die übrigen Bereiche eine relative Verschiebung dazu, bspw. eine Absenkung oder Anhebung der Referenzebene, definiert werden.

Die Referenzebene kann in einem festen Abstand, bspw. 3-6cm, von der Slotebene oder individuell festgelegt werden, insbesondere Referenzebene und Slotebene identisch sind.

Der im Schritt 1c) festzulegende relevante Ausschnitt kann mindestens einen Abschnitt des Zahns und vorzugsweise den Zahn, insbesondere zusätzlich mit einem gingivalen Abschnitt, optional zusätzlich mindestens einen Abschnitt des mesial und/oder distal benachbarten Zahns, vorzugsweise den ganzen Zahn, insbesondere jeweils zusätzlich mit einem gingivalen Abschnitt, umfassen.

Die Markierung kann als 2D-Linie oder als 3D-Körper, insbesondere als Halteabschnitt für den Zahn, ausgebildet werden.

Die Markierung kann im Fall einer 2D-Linie auf der Ober- oder Unterkante eines Slots in der Slotebene oder im Fall eines 3D-Körpers auf der Höhe der Slotebene angeordnet werden, wobei im letzteren Fall der 3D-Körper in okklusal-gingivaler Richtung bevorzugt eine Dicke aufweist, die der Höhe der Slots der Brackets in dieser Richtung entspricht.

Der Halteabschnitt wird für Bukkalbrackets bevorzugt lingual und für Lingualbrackets bevorzugt bukkal angeordnet.

Der Halteabschnitt wird im Schritt 1g) bevorzugt mit einem Techniker-Halter verbunden.

Das Erstellen des Modells im Schritt 1e) kann durch ein Ausdrucken des Ausschnitts mit einem 3D-Drucker oder mit Hilfe einer CNC-Maschine oder einer Rapid-Prototyping-Maschine erfolgen.

Der Ausschnitt im Schritt 1c) kann manuell oder automatisch, bspw. durch eine Software, festgelegt werden.

Im Schritt 1h) kann der Bracketbody mit einem individualisierten Pad verbunden werden bzw. das Standardbracket mit einem individualisierten Pad versehen werden, bspw. durch Ausfüllen eines Spalts zwischen dem Zahn und dem Pad des Standardbrackets mit einem Kunststoffmaterial und Aushärten desselben.

Im Schritt 1d) kann eine 2D-Markierung erzeugt werden, bspw. in Form einer Linie oder Punkten, wodurch die Slothöhe und die Angulation des zugehörigen Brackets festgelegt sind.

Im Schritt 1d) kann eine 3D-Markierung erzeugt werden, bspw. in Form eines Zapfens, wodurch die Slothöhe, die Angulation und der Torque des zugehörigen Brackets festgelegt sind.

Im Schritt 1d) kann eine 3D-Markierung unter zu Hilfenahme von mindestens einer Bracketrandbedingung erzeugt werden, bspw. in Form eines Zapfens, wodurch die Slothöhe, die Angulation, der Torque und die Rotation des zugehörigen Brackets festgelegt sind.

Als Bracketrandbedingung kann eine Senkrechte auf einen Bracketmittelpunkt, die senkrecht zum Slot verläuft, oder die Lage und der Verlauf des Slots verwendet werden, wobei die Randbedingung vorzugsweise zusätzlich in der im Schritt 1a) bereitgestellten 3D-Darstellung des Ober- oder Unterkiefers gespeichert ist.

Als Markierung wird bevorzugt ein zapfenförmiger Halteabschnitt erzeugt, der eine Seitenfläche aufweist, die auf Höhe der Ober- bzw. Unterkante des Slots des zugehörigen Brackets angeordnet ist.

Weitere Merkmale, Einzelheiten und Vorzüge der Erfindung ergeben sich aus den Ansprüchen und der nachfolgenden Beschreibung bevorzugter Ausführungsformen sowie anhand der Zeichnung. Es zeigen:
- Fig. 1: eine bukkale Seitenansicht eines Ziel-Set-Ups eines Unterkiefers von rechts im Gipsmodell,
- Fig. 2: zwei Seitenansichten eines Zahnabschnitts mit einem Halteelement,
- Fig. 3: einen Höhenabgleich zwischen einer Zahnaufnahme für den Zahnabschnitt der Fig. 2 und einem Halter für das Bracketelement mit einem Slot,
- Fig. 4: eine Seitenansicht der Zahnaufnahme mit eingesteckten Zahnabschnitt sowie einen Halter mit aufgestecktem Bracket,
- Fig. 5: eine perspektivische Ansicht der Fig. 4,
- Fig. 6: verschiedene Ansichten bei denen das Bracket auf den Zahnabschnitt geklebt ist, und
- Fig. 7: eine perspektivische Ansicht des Zahnabschnitts mit Bracket der Fig. 6, jedoch ohne Halteelement.

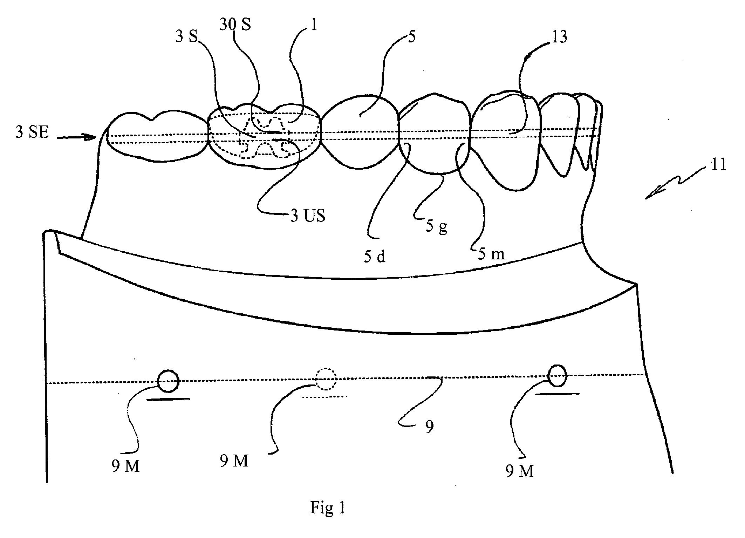

Das Verfahren wird nachfolgend anhand der Herstellung eines Ersatzbrackets für einen beliebigen Zahn eines Kiefers stellvertretend am Unterkiefer erläutert. Um erfindungsgemäß ein Ersatzbracket herzustellen, wird wie folgt vorgegangen: Von einem Patienten wird ein Gipsmodell seines Unterkiefers erstellt, der kieferorthopädisch behandelt werden soll. Das Gipsmodell wird zersägt, wobei die Zähne separiert werden. Anschließend werden die Zähne in einem Ziel-Set-Up 11, s. Fig. 1, angeordnet, das das gewünschte Behandlungsergebnis am Ende der Behandlung darstellen soll.

Dann werden Brackets 1 auf die zu behandelnden Zähne 5 geklebt. In dem Ziel-Set-Up 11 der Fig. 1 sind auf die zu behandelnden Zähne 5 Lingualbrackets 1 geklebt, wobei in Fig. 1 stellvertretend nur ein Bracket 1 auf dem Zahn 46 gestrichelt dargestellt ist. In den Slots 3S der Brackets 1 ist zur Veranschaulichung ein kieferorthopädischer Draht 13 geführt, ebenfalls nur gestrichelt dargestellt, um über die Slots 3S und die Brackets 1 eine Kraft auf die Zähne 5 auszuüben, um die jeweiligen Zähne 5 an eine gewünschte Position zu bewegen. Am Ende der kieferorthopädischen Behandlung sollen alle Slots 3S der Brackets 1 im Wesentlichen in einer Ebene, der sog. Slotebene 3SE, liegen, wie in Fig. 1 gezeigt.

Bis zu diesem Punkt entspricht das erfindungsgemäße Verfahren manchen herkömmlichen Planungsverfahren für eine kieferorthopädische Behandlung: Es wird ein Ziel-Set-Up 11 aus Gips hergestellt und auf die Zähne 5 werden Brackets 1 geklebt, wobei die Slots 3S der Brackets in einer Ebene 3SE liegen.

In einem definierten Abstand von der Slotebene 3SE, bspw. der Oberkante 30S oder der Unterkante 3US der Slots 3S der Brackets 1, wird nun eine Referenzebene 9 definiert. Die Referenzebene 9 ist in Fig. 1 gestrichelt dargestellt. Sie wird vorliegend durch drei Referenzebenenmarkierungen 9M in Form von Kreisen auf dem Gipsmodell definiert, deren jeweilige Mittelpunkte die Referenzebene 9 definieren. Von den drei Referenzebenenmarkierungen 9M ist eine gestrichelt dargestellt, da sie sich auf der gegenüberliegenden (verdeckten linken) Seite des Gipsmodells befindet. Die Referenzebene 9 weist einen festen Abstand von der Unterkante 3US der Slots 3S der Brackets 1 auf, bspw. einen Abstand aus einem Intervall von 1 bis 10cm, vorliegend 3cm.

Ist die Referenzebene 9 definiert und auf dem Ziel-Set-Up 11 eingezeichnet, so werden die Brackets 1 von dem Ziel-Set-Up 11 entfernt, wodurch sich das Ziel-Set-Up 11 der Fig. 1 ohne das gestrichelt dargestellte Bracket 1 und den gestrichelt dargestellten Draht 13 ergibt.

Das auf diese Weise hergestellte Ziel-Set-Up 11 wird nun mit Hilfe eines Scanners gescannt und das digitale Computermodell des Ziel-Set-Ups 11 wird in einem Computer gespeichert. In dem Computer liegt somit ein Modell des Ziel-Set-Ups 11 vor, das auch die Referenzebene 9 enthält. Dadurch, dass das Computermodell die Referenzebene 9 enthält und die Relation zwischen Slotebene 3S und Referenzebene 9 bekannt ist, ist für das Computermodell auch die Slotebene 3S definiert.

Trifft nun die Anforderung ein, ein Ersatzbracket für einen bestimmten Zahn herzustellen, wird wie folgend beschrieben vorgegangen.

Es wird das o.g. Computermodell des Ziel-Set-Ups 11 in den Computer geladen. Der Zahn 5, für den das Ersatzbracket hergestellt werden soll, wird in dem Modell ausgewählt und von Hand aus dem übrigen Modell herausgeschnitten, so dass nur noch das Computermodell des betroffenen Zahns 5 zur folgenden Bearbeitung vorliegt.

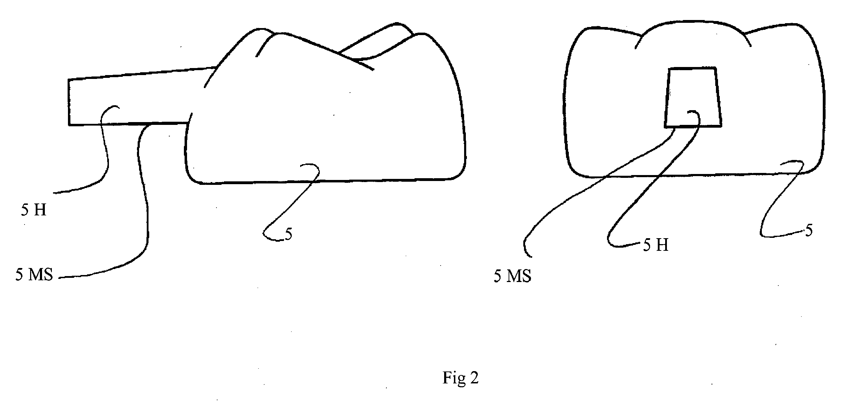

Mit Hilfe der Referenzebene 9, die in dem Computermodell noch zur Verfügung steht, wird dem Zahn 5 eine Markierung für die Unterkante 3US der Slotebene 3SE des Slots 3S des dem betroffenen Zahns 5 zugehörigen Brackets 1 hinzugefügt. Um das physische Modell des Zahns in den folgenden Arbeitsschritten handhaben zu können, wird dem Computermodell ein Halteabschnitt für den Zahn hinzugefügt, vorliegend beispielhaft in Form eines Zapfens gezeigt. Zur Vereinfachung wird der Halteabschnitt derart dem Computermodell des Zahns hinzugefügt, dass eine Kante des Halteabschnitts auf Höhe der Unterkante 3US des Slots 3S angeordnet ist. Das Computermodell des Zahns ergibt sich nun aus der Darstellung der Fig. 2.

Fig. 2 zeigt zwei Seitenansichten eines 3D-Modells des Zahns 5, für den ein Ersatzbracket hergestellt werden soll. Von dem Zahn 5 ist nur der Abschnitt zu erkennen, der oberhalb des gingivalen Randes liegt, d.h. der normalerweise beim Patienten sichtbare Bereich des Zahns 5. Dem Zahn 5 wurde als Halter ein Halteabschnitt 5H in Form eines Zapfens hinzugefügt. Der Halteabschnitt 5H hat als Querschnitt im Wesentlichen die Form eines Rechtecks, wobei die in Fig. 2 obere Seitenkante des Rechtecks gegenüber der unteren leicht verkürzt ist. Der Halteabschnitt 5H ist so am Modell des Zahns 5 angeordnet, dass die in Fig. 2 untere Seitenkante eine Markierung 5MS für die Slotebene ist, d.h. diese Kante ist auf der Höhe der Unterkante 3US des Slots 3S des zugehörigen Brackets 1 angeordnet.

In dem Computer liegt somit ein Modell des Zahns 5 vor, für den ein Ersatzbracket hergestellt werden soll. Das Modell wurde erweitert um den Halteabschnitt 5H, der die Form eines Zapfens aufweist und dessen eine Kante auf der Höhe der Unterkante 3US des Slots 3S des zugehörigen Brackets 1 angeordnet ist.

Das auf diese Weise erstellte Computermodell der Fig. 2 wird im nächsten Schritt als physisches Modell hergestellt, bspw. mit Hilfe eines 3D-Druckers aus Kunststoff ausgedruckt bzw. hergestellt. Es liegt dann ein Kunststoffmodell des Zahns 5 vor, das eine Höhenmarkierung für die Unterkante 3US des Slots 3S hat und einen Halteabschnitt 5H zum Halten des physischen Modells hat.

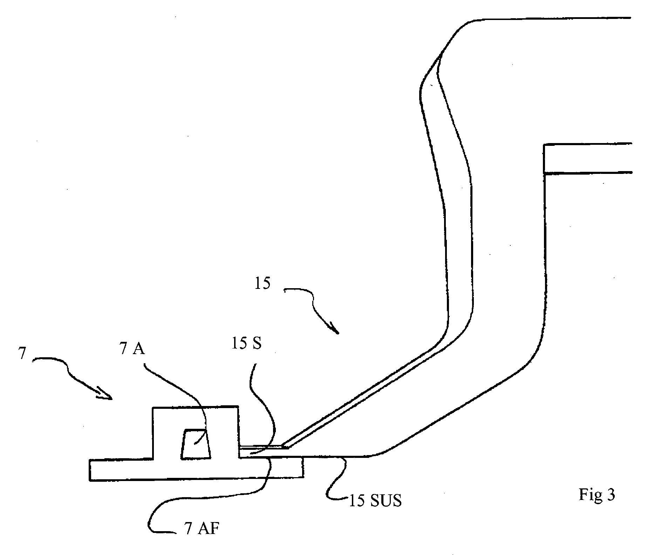

Fig. 3 zeigt die Frontansicht einer Halteabschnittaufnahme 7 eines Techniker-Halters, die zur Aufnahme des Halteabschnitts 5H des ausgedruckten Zahns 5 ausgelegt ist, und die Seitenansicht einer Slotaufnahme 15 eines weiteren Techniker-Halters zur Aufnahme eines Slots 3S.

Die Slotaufnahme 15 hat in der Ansicht der Fig. 3 in vertikaler Richtung am freien Ende die Dicke eines slotfüllenden kieferorthopädischen Drahtes. Das freie Ende simuliert auf diese Weise einen slotfüllenden kieferorthopädischen Draht, d.h. es bildet einen Drahtsimulator 15S. Ein Slot 3S eines Brackets kann somit spielfrei auf diesen Drahtsimulator 15S geschoben werden, wie unten beschrieben. Die Unterseite 15SUS des Drahtsimulators 15S liegt nach folgend beschriebenen Höhenabgleich auf derselben Höhe wie die Unterkante 3US eines Slots 3S des dem Zahn 5 zugehörigen Brackets 1, wie in Fig. 3 dargestellt.

Die Halteabschnittaufnahme 7 weist zentral eine Ausnehmung 7A auf, die derart bemessen ist, dass in diese der Halteabschnitt 5H des ausgedruckten Zahns 5 formschlüssig gesteckt werden kann. Wie oben beschrieben, liegt die in Fig. 3 untere Kante der Ausnehmung 7A auf der Höhe der Unterkante 3US des Slots 3 des dem Zahn 5 zugehörigen Brackets 1. Die Auflagefläche 7AF der Halteabschnittaufhahme 7, auf der die Unterseite 15SUS aufliegt, liegt auf derselben Höhe wie die Unterseite der Ausnehmung 7A.

Die Slotaufnahme 15 an dem einen Techniker-Halter und die Halteabschnittaufnahme 7 an dem anderen Techniker-Halter haben somit jeweils Kanten, die auf der Höhe der Unterkante 3US des Slots 3S des dem Zahn 5 zugehörigen Brackets 1 liegen. Um diese Höhen auf den gleichen Nullpunkt zu beziehen, werden diese Höhen aneinander abgeglichen, wie in Fig. 3 gezeigt. Die Unterseite 15SUS wird auf die dargestellte Auflagefläche 7AF der Halteabschnittaufnahme 7 aufgelegt und somit die wechselseitigen Nullpunkte der Slotaufnahme 15 und der Halteabschnittaufnahme 7 aneinander abgeglichen, wodurch der Höhenabgleich abgeschlossen ist.

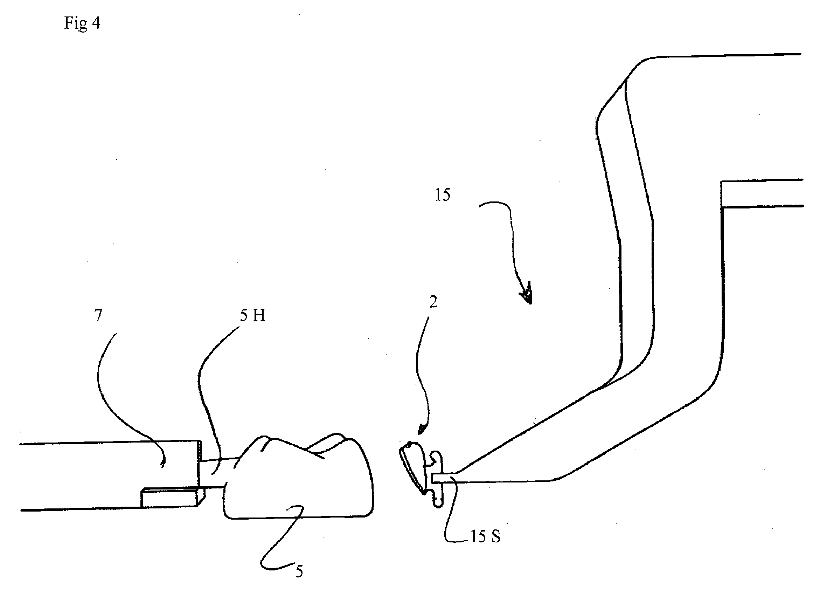

In einem nächsten Verfahrensschritt wird der ausgedruckte Zahn 5 mit seinem Halteabschnitt 5H in die Ausnehmung 7A der Halteabschnittaufnahme 7 gesteckt und ein Standardbracket 2 auf den Drahtsimulator 15S der Slotaufnahme 15 gesteckt, wie in Fig. 4 dargestellt. Wie der Fig. 4 ferner zu entnehmen, werden der ausgedruckte Zahn 5 und das Standardbracket 2 aneinander heran geführt, um das Standardbracket 2 geeignet auf den ausgedruckten Zahn 5 zu setzen.

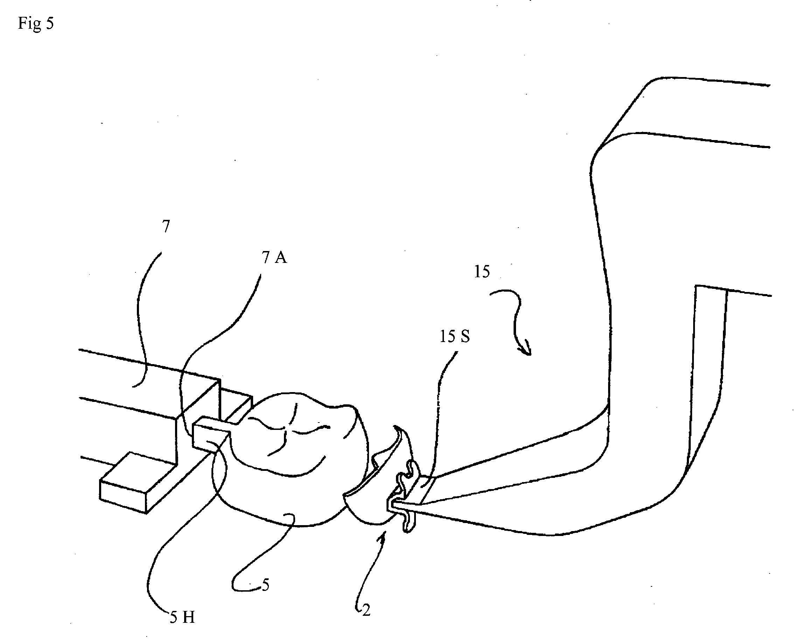

Fig. 5 zeigt eine perspektivische Ansicht der in Fig. 4 dargestellten Anordnung.

Ist das Standardbracket 2 geeignet relativ zum ausgedruckten Zahn 5 positioniert, so wird ein Spalt zwischen dem Pad des Standardbrackets 2 und dem ausgedruckten Zahn 5 mit einem Kunststoffmaterial bzw. einem Klebstoff gefüllt und ausgehärtet, um ein patientenspezifisches Pad für das Standardbracket 2 zu bilden.

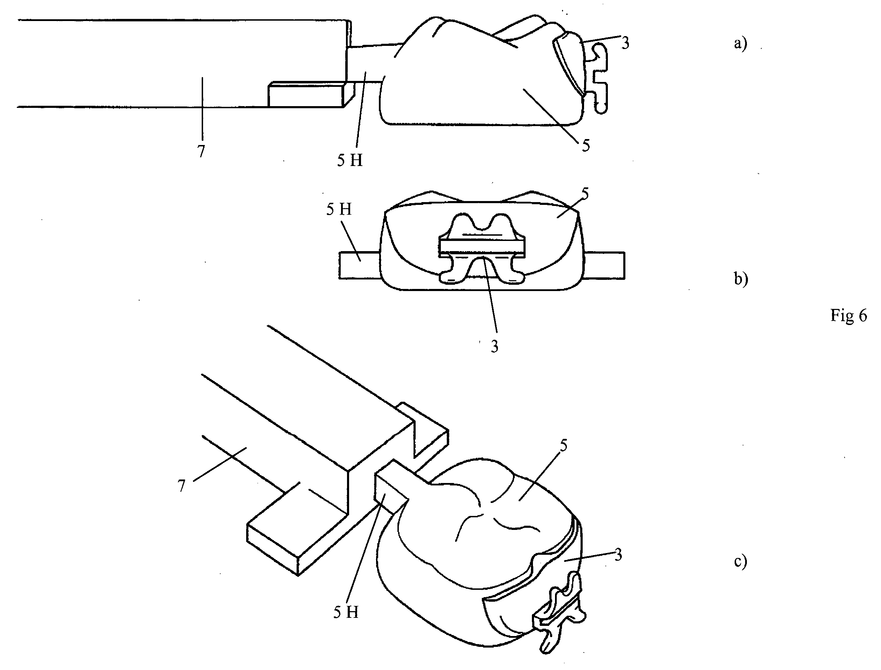

Ist die Härtung erfolgt, kann der Techniker-Halter mit der Slotaufnahme entfernt werden, wodurch sich die in Fig. 6 dargestellte Anordnung ergibt. Fig. 6 zeigt aus verschiedenen Ansichten das auf den ausgedruckten Zahn 5 geklebte Standardbracket 2, das nun das Ersatzbracket 3 bildet.

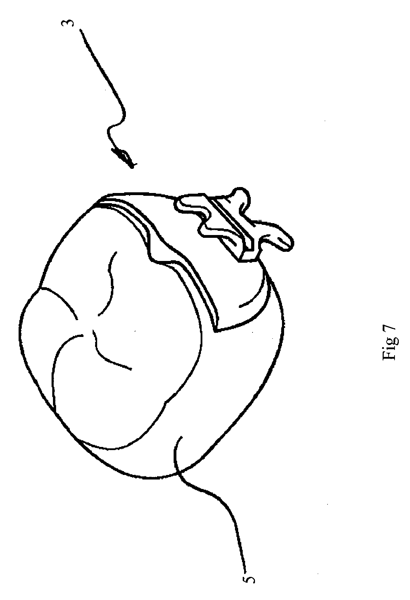

Folgend wird der Halteabschnitt 5H aus der Ausnehmung 7A heraus gezogen und der Halteabschnitt 5H von dem ausgedruckten Zahn 5 entfernt, bspw. abgeschliffen, wodurch sich die Anordnung der Fig. 7 ergibt. Diese Anordnung kann nun an den Besteller des Ersatzbrackets versandt werden.

Kommt die Anordnung der Fig. 7 beim Besteller des Ersatzbrackets an, so kann er das Standardbracket 2 mit dem padseitig angeordnetem Kunststoffmaterial von dem ausgedruckten Zahn 5 lösen und erhält so das Ersatzbracket 3. Das Ersatzbracket 3 umfasst somit das Standardbracket 2 und das individualisierte Pad, das von dem gehärteten Kunststoffmaterial gebildet wird.

Das Ersatzbracket 3 kann durch das individualisierte Pad formschlüssig auf den Zahn 5 des Patienten geklebt werden.

In dem o.g. Verfahren zur Herstellung eines Ersatzbrackets wurde ein Lingualbracket hergestellt. Das Verfahren kann jedoch auf gleiche Weise verwendet werden, um Bukkalbrackets herzustellen.

Die Referenzebene 9 wurde in dem oben beschriebenen Verfahren als eine Ebene dargestellt, die für alle Zähne 5 eines Kiefers eines Patienten gilt. Es kann jedoch notwendig sein, die Referenzebene 9 jeweils nur für einzelne Bereiche eines Kiefers zu definieren, d.h. in Intervalle zu unterteilen. In einigen Fällen erweist es sich als notwendig, die Slotebene und somit die Referenzebene im linken und/oder rechten Seitenzahnbereich aus kieferorthopädischen Gründen abzusenken. In einem solchen Fall kann die Referenzebene von 47 bis 33 auf einer Höhe liegen und für den Bereich von 34 bis 37 auf einer anderen Höhe, bspw. 1mm gegenüber der anderen abgesenkt, liegen. In einem anderen Fall kann eine Referenzebene von 33 bis 43 definiert werden und in dem Bereich von 34 bis 37 eine Absenkung um 0,5mm und in dem Bereich von 44 bis 47 eine Absenkung von 1mm definiert werden. In derartigen Fällen kann es ausreichend sein, lediglich die Absenkung oder Anhebung in den betroffenen Zahnbereichen und die betroffenen Zahnbereiche zu notieren und die Absenkung oder Anhebung nicht in dem Modell einzuzeichnen. Auf diese Weise erhält die Referenzebene in definierten Abschnitten variable Höhen durch die Anpassung der Slotebene in diesen Abschnitten.

Die Referenzebene 9 kann auf derselben Seite wie die Brackets 1 angeordnet werden, d.h. bei bukkalen Brackets auf der bukkalen Seite und bei lingualen Brackets auf der lingualen Seite eingezeichnet werden. Alternativ ist es jedoch auch möglich, die Referenzebene auf der jeweils anderen Seite einzuzeichnen. So ist es bspw. möglich, bei bukkalen Brackets die Referenzebene 9 auf der lingualen Seite einzuzeichnen, insbesondere auf der lingualen Seite mancher ausgewählter oder aller Zähne. Auf diese Weise kann die Referenzebene 9 individuell für jeden Zahn eingezeichnet werden und in einem geringen räumlichen Abstand von dem Slot 3S des zugehörigen Brackets 1. So ist es bspw. möglich, die Unterkante 3US eines Slots 3S eines Brackets 1 als Referenzebene 9 für den zugehörigen Zahn 5 zu verwenden.

In dem oben beschriebenen Verfahren zur Herstellung eines Ersatzbrackets wurde das Ziel-Set-Up aus Gips erstellt. Alternativ ist es möglich, das Ziel-Set-Up in einem Computer mit Hilfe einer Software zu erstellen. Auch die weiteren Schritte, wie bspw. das Anordnen von Brackets auf den Zähnen, das Definieren der Slotebene und das Definieren der Referenzebene, können direkt in der Software ausgeführt werden. Das sich dabei ergebende virtuelle Set-Up kann mit den Brackets, dem kieferorthopädischen Draht, der Slotebene und der Referenzebene gespeichert werden oder auch nur mit Teilen davon, bspw. nur mit der Slotebene und der Referenzebene. Trifft dann eine Anforderung zur Herstellung eines Ersatzbrackets ein, so kann aus dem Modell direkt heraus der gewünschte Abschnitt des Zahns hergestellt werden.

Um das Ersatzbracket für den Zahn 5 herzustellen, wurde in dem oben beschriebenen Verfahren der beim Patienten sichtbare Bereich des Zahns 5 von Hand aus dem übrigen Computermodell des Ziel-Set-Ups 11 herausgeschnitten. Für die Herstellung des Ersatzbrackets kann es jedoch ausreichen, einen kleinen Abschnitt des Zahns auszuwählen, bspw. nur die bukkale Hälfte des Zahns auszudrucken ohne die linguale Hälfte des Zahns. Es kann aber auch notwendig sein, einen größeren Abschnitt auszuwählen, bspw. einen gingivalen Abschnitt 5g, s. Fig. 1, hinzuzunehmen oder auch mesiale und/oder distale Abschnitte 5m, 5d von benachbarten Zähnen 5, s. Fig. 1, hinzuzunehmen. Das Festlegen des relevanten Abschnitts kann von Hand erfolgen, wie zuvor beschrieben. Es ist aber auch möglich, den relevanten Abschnitt von einer Software definieren zu lassen. So kann zum Beispiel mit Hilfe eines Edge-Finder-Algorithmus immer der Zahn 5, wie in Fig. 2 gezeigt, automatisch gefunden und von dem übrigen Computermodell herausgeschnitten werden.

Das oben beschriebene Verfahren zur Herstellung eines Ersatzbrackets generiert ein patientenspezifisches Pad für ein Standardbracket. Bei dem Standardbracket sind Pad und Bracketbody eine Einheit und es wird das patientenspezifische Pad erzeugt, um das patientenspezifische Ersatzbracket herzustellen. Es gibt jedoch auch andere Herstellungsverfahren für patientenspezifische Brackets, bei denen z.B. erst ein Pad mit einer patientenspezifischen Klebefläche hergestellt wird und dann das auf diese Weise hergestellte Pad mit einem Bracketbody zu einem Bracket vereinigt wird. Ein derartiges Herstellungsverfahren ist bspw. in DE102011003892 offenbart. Das erfindungsgemäße Herstellungsverfahren eignet sich auch für diese Art von Herstellungsverfahren. Zu diesem Zweck kann wie oben beschrieben verfahren werden und es muss in Fig. 4 und 5 lediglich auf die Slotaufnahme 15 der Bracketbody aufgesetzt werden und auf den ausgedruckten Zahn 5 das patientenspezifische Pad aufgesetzt werden, um folgend den Bracketbody auf dem individualisierten Pad zu befestigen, bspw. durch Laserschweißen, um das patientenspezifische Ersatzbracket herzustellen.

In dem oben beschriebenen Verfahren zur Herstellung eines Ersatzbrackets wurde als Markierung für die Slotebene ein Halteabschnitt 5H dem Computermodell des Zahns 5 hinzugefügt. Dabei wurde lediglich die Höhe des Halteabschnitts 5H so festgelegt, dass dessen Unterkante auf der Höhe der Unterkante 3US des Slots 3S des Brackets liegt. Wo der Halteabschnitt 5H entlang des Zahnumfangs (auf derselben Höhe) liegt, ist vorliegend ohne Bedeutung, so kann der Halteabschnitt 5H bspw. mesial, lingual oder distal angeordnet sein für ein bukkales Bracket.

Bei verschiedenen Arten von Markierungen der Slotebene auf dem Zahn im Computermodell können verschiedene andere Parameter der Behandlung des Zahns festgelegt werden:
Wird die Slotebene auf dem Zahn mit Hilfe einer 2D-Markierung festgelegt, bspw. durch eine Linie, Streifen oder eine Reihe von Punkten, so sind durch diese Markierung lediglich die Slothöhe und die Angulation, d.h. die Kippung in mesial-distaler Richtung, des Brackets festgelegt.

Wird die Slotebene auf dem Zahn mit Hilfe einer 3D-Markierung festgelegt, wie bspw. durch den zapfenförmigen Halteabschnitt 5H gemäß der Fig. 2, so sind dadurch die Slothöhe, die Angulation und der Torque, d.h. die Kippung in lingual-bukkaler-Richtung, des Brackets festgelegt.

Wird die Slotebene auf dem Zahn mit Hilfe einer 3D-Markierung an einer vorbestimmten Stelle eindeutig, d.h. ohne freien Freiheitsgrad, festgelegt, bspw. dadurch, dass der Halteabschnitt 5H der Fig. 2 auf der gleichen Höhe entlang des Zahnumfangs an einer bestimmten Umfangsstelle angedruckt wird, so sind Slothöhe, Angulation, Torque und Rotation, d.h. die Drehung um die Zahnlängsachse, des Brackets festgelegt.

Um letztere Variante realisieren zu können, kann bspw. wie folgt vorgegangen werden: in dem Computermodell wird eine Zusatzinformation, d.h. eine Bracketrandbedingung, für jedes Bracket gespeichert, die dessen Lage am Zahn eindeutig macht. Als Zusatzinformation kann bspw. eine durch den Bracketmittelpunkt und senkrecht zu einer Oberfläche des Brackets verlaufende Gerade verwendet werden. Als Zusatzinformation kann auch der Slot des Brackets, d.h. dessen Lage bzw. Anordnung im Raum, mit abgespeichert werden.

Praktischerweise kann dazu wie folgt vorgegangen werden: Das in Fig. 1 dargestellte Ziel-Set-Up 11 wird zuerst mit Brackets und dann ohne Brackets abgespeichert. Ausgehend von dem Computermodell ohne Brackets wird dann in dem erfindungsgemäßen Verfahren eine 3D-Markierung dem Zahn 5 hinzugefügt, bspw. ein in Fig. 2 gezeigter Halteabschnitt 5H. Die Lage des Halteabschnitts 5H entlang des Zahnumfangs wird dann mit Hilfe des Computermodells mit Brackets festgelegt: Das Modell mit Brackets wird über das andere Modell drüber geladen und der Halteabschnitt 5H bspw. so lange entlang des Zahnumfangs verschoben, bis er dem Bracket aus dem Ziel-Set-Up 11 genau gegenüber liegt, d.h. dass die Längsachse des Halteabschnitts 5H genau senkrecht zur Längsachse des Slots und durch die Slotmitte verläuft. Dann kann im späteren Schritt, der dem Anordnen des Standardbrackets 2 gemäß den Fig. 4 und 5 entspricht, das Bracket so an dem Halteabschnitt 5H ausgerichtet werden, bis das Standardbracket 2 dem Halteabschnitt 5H exakt gegenüber liegt. Das Standardbracket 2 hat dann exakt die Lage wie das Bracket 1 beim Eingangsscan der Modelle mit und ohne Brackets.

### Bezugszeichenliste

- 1: Bracket
- 2: Standardbracket
- 3: Ersatzbracket
- 3S: Slot
- 3OS: Oberkante des Slots
- 3US: Unterkante des Slots
- 3SE: Slotebene
- 5: Zahn
- 5d: distaler Abschnitt
- 5g: gingivaler Abschnitt
- 5H: Halteabschnitt für Zahn
- 5m: mesialer Abschnitt
- 5MS: Markierung für die Slotebene
- 7: Halteabschnittaufnahme eines Techniker-Halters für den Halteabschnitt 5H
- 7A: Ausnehmung der Halteabschnittaufnahme
- 7AF: Auflagefläche
- 9: Referenzebene
- 9M: Referenzebenenmarkierung
- 11: Ziel-Set-Up des Unterkiefers eines Patienten
- 13: kieferorthopädischer Draht
- 15: Slotaufnahme eines Techniker-Halters zur Aufnahme eines Slots 3S
- 15S: Drahtsimulator
- 15 SUS: Unterseite des Drahtsimulators

## Patentansprüche

1. Verfahren zum Herstellen eines patientenspezifischen Ersatzbrackets (3) mit folgenden Schritten:
a) Bereitstellen einer 3D-Darstellung des Ober- oder Unterkiefers eines Patienten im Ziel-Set-Up mit einer Referenzebene (9) in einem Rechner,
b) Erhalten einer Anforderung, ein Ersatzbracket (3) für einen Zahn (5) des Ober- oder Unterkiefers herzustellen,
c) Festlegen eines Ausschnitts der 3D-Darstellung des Ober- oder Unterkiefers, der mindestens einen Abschnitt des Zahns (5) enthält, für den das Ersatzbracket (3) hergestellt werden soll,
d) Erzeugung einer Markierung (5MS) für die Slotebene (3SE) in dem Ausschnitt mit Hilfe der Referenzebene (9),
e) Erstellen eines physikalischen Modells des Ausschnitts mit der Markierung (5MS),
f) Bereitstellen eines den Slot (3S) enthaltenden Bracketelements, bspw. eines Bracketbody oder eines Standardbrackets (2),
g) Ausrichten des Bracketelements (2) an der Slotebene (3SE) und
h) Zuordnung eines individualisierten Pads an dem Bracketelement, wodurch das Ersatzbracket (3) hergestellt ist.

2. Verfahren nach Anspruch 1, **dadurch gekennzeichnet, dass** der Schritt 1a) umfasst:
a) Erstellen eines patientenspezifischen Ziel-Set-Ups (11) des Ober- oder Unterkiefers
eines Patienten,
b) Bestimmen einer Slotebene (3SE) von auf zu behandelnden Zähnen (5) des Ober- oder Unterkiefers anzuordnenden Brackets (1),
c) Anordnen von Brackets (1) auf zu behandelnden Zähnen des Ober- oder Unterkiefers,
d) Bestimmen der Referenzebene (9) in dem Ziel-Set-Up (11) relativ zu der Slotebene,
e) Entfernen der Brackets (1) von dem Ziel-Set-Up (11) und
f) elektronische Speicherung des Ziel-Set-Ups, einschließlich der Referenzebene (9).

3. Verfahren nach einem der vorangehenden Ansprüche, **dadurch gekennzeichnet, dass** der Schritt 2a) an Hand eines Gipsmodells oder an Hand eines virtuellen Modells des Ober- oder Unterkiefers durchgeführt wird.

4. Verfahren nach einem der vorangehenden Ansprüche, **dadurch gekennzeichnet, dass** der Schritt 2d) vor dem Schritte 2c) durchgeführt wird.

5. Verfahren nach einem der vorangehenden Ansprüche, **dadurch gekennzeichnet, dass** im Schritt 2f) die elektronische Speicherung durch Scannen eines physikalischen Ziel-Set-Ups (11) oder durch Abspeichern eines digitalen Ziel-Set-Ups erfolgt.

6. Verfahren nach einem der vorangehenden Ansprüche, **dadurch gekennzeichnet, dass** im Schritt 1f) als Bracketelement (2) ein Lingual- oder Bukkalbracketelement bereitgestellt wird, um als Ersatzbracket (3) ein Lingualbracket oder ein Bukkalbracket herzustellen.

7. Verfahren nach einem der vorangehenden Ansprüche, **dadurch gekennzeichnet, dass** die Referenzebene (9) im Schritt 1a) kontinuierlich, bspw. durch eine Linie, oder intermittierend, bspw. durch Strichpunkte an ausgewählten Zähnen (5), dargestellt wird.

8. Verfahren nach einem der vorangehenden Ansprüche, **dadurch gekennzeichnet, dass** die Referenzebene (9) im Schritt 1a) für alle Zähne gleich definiert wird, bspw. von 18 bis 28, oder für einen ausgewählten Bereich definiert wird, bspw. von 13 bis 23, und für die übrigen Bereiche eine relative Verschiebung dazu, bspw. eine Absenkung oder Anhebung der Referenzebene (9), definiert wird.

9. Verfahren nach einem der vorangehenden Ansprüche, **dadurch gekennzeichnet, dass** die Referenzebene (9) in einem festen Abstand, bspw. 3-6cm, von der Slotebene (3SE) oder individuell festgelegt wird, insbesondere die Referenzebene mit der Slotebene identisch ist.

10. Verfahren nach einem der vorangehenden Ansprüche, **dadurch gekennzeichnet, dass** der im Schritt 1c) festzulegende relevante Ausschnitt mindestens einen Abschnitt des Zahns (5) und vorzugsweise den Zahn (5), insbesondere zusätzlich mit einem gingivalen Abschnitt (5g), optional zusätzlich mindestens einen Abschnitt des mesial und/oder distal benachbarten Zahns, vorzugsweise den ganzen Zahn, insbesondere jeweils zusätzlich mit einem gingivalen Abschnitt, umfasst.

11. Verfahren nach einem der vorangehenden Ansprüche, **dadurch gekennzeichnet, dass** die Markierung (5MS) als 2D-Linie oder als 3D-Körper, insbesondere als Halteabschnitt (5H) für den Zahn (5), ausgebildet wird.

12. Verfahren nach einem der vorangehenden Ansprüche, **dadurch gekennzeichnet, dass** die Markierung (5MS) im Fall einer 2D-Linie auf Ober- oder Unterkante (30S, 3US) eines Slots (3S) in der Slotebene (3SE) oder im Fall eines 3D-Körpers auf Höhe der Slotebene (3SE) angeordnet wird, wobei im letzteren Fall der 3D-Körper in okklusal-gingivaler Richtung bevorzugt eine Dicke aufweist, die der Höhe der Slots der Brackets (1) in dieser Richtung entspricht.

13. Verfahren nach einem der vorangehenden Ansprüche, **dadurch gekennzeichnet, dass** der Halteabschnitt (5H) für Bukkalbrackets lingual und für Lingualbrackets bukkal angeordnet wird.

14. Verfahren nach einem der vorangehenden Ansprüche, **dadurch gekennzeichnet, dass** der Halteabschnitt (5H) im Schritt 1g) mit einem Techniker-Halter verbunden wird.

15. Verfahren nach einem der vorangehenden Ansprüche, **dadurch gekennzeichnet, dass** das Erstellen des Modells im Schritt 1e) durch ein Ausdrucken des Ausschnitts mit einem 3D-Drucker erfolgt oder mit Hilfe einer CNC-Maschine oder einer Rapid-Prototyping-Maschine erfolgt.

16. Verfahren nach einem der vorangehenden Ansprüche, **dadurch gekennzeichnet, dass** der Ausschnitt im Schritt 1c) manuell oder automatisch, bspw. durch eine Software, festgelegt wird.

17. Verfahren nach einem der vorangehenden Ansprüche, **dadurch gekennzeichnet, dass** im Schritt 1h) der Bracketbody mit einem individualisierten Pad verbunden wird bzw. das Standardbracket (2) mit einem individualisierten Pad versehen wird, bspw. durch Ausfüllen eines Spalts zwischen dem Zahn (5) und dem Pad des Standardbrackets (2) mit einem Kunststoffmaterial und Aushärten desselben.

18. Verfahren nach einem der vorangehenden Ansprüche, **dadurch gekennzeichnet, dass** im Schritt 1d) eine 2D-Markierung erzeugt wird, bspw. in Form einer Linie oder Punkten, wodurch die Slothöhe und die Angulation des zugehörigen Brackets (3) festgelegt sind.

19. Verfahren nach einem der vorangehenden Ansprüche, **dadurch gekennzeichnet, dass** im Schritt 1d) eine 3D-Markierung (5H) erzeugt wird, bspw. in Form eines Zapfens, wodurch die Slothöhe, die Angulation und der Torque des zugehörigen Brackets (3) festgelegt sind.

20. Verfahren nach einem der vorangehenden Ansprüche, **dadurch gekennzeichnet, dass** im Schritt 1d) eine 3D-Markierung unter zu Hilfenahme von mindestens einer Bracketrandbedingung erzeugt wird, bspw. in Form eines Zapfens, wodurch die Slothöhe, die Angulation, der Torque und die Rotation des zugehörigen Brackets festgelegt sind.

21. Verfahren nach einem der vorangehenden Ansprüche, **dadurch gekennzeichnet, dass** als Bracketrandbedingung eine Senkrechte auf einen Bracketmittelpunkt, die senkrecht zum Slot verläuft, oder die Lage und der Verlauf des Slots verwendet wird, wobei die Randbedingung vorzugsweise zusätzlich in der im Schritt 1a) bereitgestellten 3D-Darstellung des Ober- oder Unterkiefers gespeichert ist.

22. Verfahren nach einem der vorangehenden Ansprüche, **dadurch gekennzeichnet, dass** als Markierung ein zapfenförmiger Halteabschnitt (5H) erzeugt wird, der eine Seitenfläche aufweist, die auf Höhe der Ober- bzw. Unterkante (3OS, 3US) des Slots des zugehörigen Brackets angeordnet ist.

## Claims

1. Process for the manufacture of a patient-specific replacement bracket (3) comprising the following steps:
a) providing a 3D representation of the supramaxilla or submaxilla of the patient in the target set-up having a reference plane (9) in a computer;
b) receiving a request to manufacture a replacement bracket (3) for a tooth (5) of the supramaxilla or submaxilla;
c) defining a sector of the 3D representation of the supramaxilla or submaxilla which contains at least a section of the tooth (5) for which the replacement bracket (2) is to be manufactured;
d) generating a marking (5MS) for the slot plate (3SE) in the section by means of the reference plane (9);
e) creating a physical model of the section with the marking (5MS);
f) providing a bracket element containing the slot (3S), e.g. a bracket body or a standard bracket (2);
g) aligning said bracket element (2) to the slot plane (3SE) and
h) assigning an individualized pad to the bracket element, whereby the replacement bracket (3) is manufactured.

2. Process according to claim 1, **characterized in that** the step 1a) comprises:
a) creating a patient-specific target set-up (11) of the supramaxilla or submaxilla of a patient;
b) determining a slot plane (3SE) of brackets (1) to be arranged on teeth (5) to be treated of the supramaxilla or submaxilla;
c) arranging of brackets (1) on teeth to be treated of the supramaxilla or submaxilla;
d) determining the reference plane (9) in the target set-up (11) relative to the slot plane;
e) removing in the brackets (1) from the target set-up (11) and
f) electronically storing the target set-up including the reference plane (9).

3. Process according to one of the preceding claims, **characterized in that** the step 2a) is performed by means of a gypsum model or by means of a virtual model of the supramaxilla or submaxilla.

4. Process according to one of the preceding claims, **characterized in that** the step 2d) is performed prior to the step 2c).

5. Process according to one of the preceding claims, **characterized in that** in step 2f) the electronic storing is effected by a scanning a physical target set-up (11) or by storing a digital target set-up.

6. Process according to one of the preceding claims, **characterized in that** in step 1f) a lingual or buccal bracket element is provided as a bracket element (2) in order to manufacture a lingual or a buccal bracket as a replacement bracket (3).

7. Process according to one of the preceding claims, **characterized in that** the reference plane (9) in step 1a) is displayed continuously, e.g. by a line, or intermittently, e.g. by dash-dots on selected teeth (5).

8. Process according to one of the preceding claims, **characterized in that** the reference plane (9) in step 1a) is defined the same for all teeth, for example from 18 to 28, or is defined for a selected region, for example from 13 to 23, and for the remaining regions a displacement relative thereto, for example, a lowering or raising of the reference plane (9) is defined.

9. Process according to one of the preceding claims, **characterized in that** the reference plane (9) is defined at a fixed distance, for example 3 - 6 cm, from the slot plane (3SE), or is defined individually, particularly the reference plane is identical with the slot plane.

10. Process according to one of the preceding claims, **characterized in that** the relevant sector to be defined in Step 1c) comprises at least a section of the tooth (5), and preferably the tooth (5), particularly with an additional gingival section (5g), optionally at least an additional section of the mesially and/or distally adjacent tooth, preferably the whole tooth, particularly each with an additional gingival section.

11. Process according to one of the preceding claims, **characterized in that** the marking (5MS) is realized as a 2D line or as a 3D body, particularly as a retaining section (5H) for the tooth (5).

12. Process according to one of the preceding claims, **characterized in that** in the case of a 2D line the marking (5MS) is arranged on the upper or lower edge (3OS, 3US) of a slot (3S) in the slot plane (3SE), or in the case of a 3D body is arranged at the level of the slot plane (3SE), wherein in the latter case the 3D body in occlusal-gingival direction preferably has a thickness that corresponds to the level of the slot of the brackets (1) in this direction.

13. Process according to one of the preceding claims, **characterized in that** the retaining section (5H) is arranged lingually for buccal brackets and buccally for lingual brackets.

14. Process according to one of the preceding claims, **characterized in that** the retaining section (5 H) in step 1g) is connected to a technician's holder.

15. Process according to one of the preceding claims, **characterized in that** creating the model in step 1e) is effected by printing the sector by a 3D printer, or by means of a CNC machine or a rapid prototyping machine.

16. Process according to one of the preceding claims, **characterized in that** the sector in step 1c) is defined manually or automatically, for example by a software.

17. Process according to one of the preceding claims, **characterized in that** in step 1h) the bracket body is connected to an individualized pad, or the standard bracket (2) is provided with an individualized pad, for example, by filling a gap between the tooth (5) and the pad of the standard bracket (2) with a plastic material and curing the same.

18. Process according to one of the preceding claims, **characterized in that** in step 1d) a 2D marking is generated, for example in the form of a line or dots, whereby the slot level and the angulation of the corresponding bracket (3) are defined.

19. Process according to one of the preceding claims, **characterized in that** in step 1d) a 3D marking (5H) is generated, for example in the form of a pin, whereby the slot level, the angulation and the torque of the corresponding bracket (3) are defined.

20. Process according to one of the preceding claims, **characterized in that** in step 1d) a 3D marking is generated with the help of at least one bracket constraint, for example in the form of a pin, whereby the slot level, the angulation, the torque and the rotation of the corresponding bracket are defined.

21. Process according to one of the preceding claims, **characterized in that** a perpendicular to a bracket center that extends perpendicularly to the slot or the position and the profile of the slot is used as the bracket constraint, wherein the constraint preferably is additionally stored in the 3D representation of the supramaxilla or submaxilla provided in step 1a).

22. Process according to one of the preceding claims, **characterized in that** as the marking a pin-shaped retaining section (5 H) is generated having a lateral surface that is arranged at the level of the upper or lower edge (30S, 3US) of the slot of the corresponding bracket.

## Revendications

1. Procédé de fabrication d'un appareil dentaire de remplacement sur mesure (3) spécifique au patient, comportant les phases suivantes:
a) Préparation d'une représentation 3D de la mâchoire supérieure ou de la mâchoire inférieure d'un patient dans le modèle avec un plan de référence (9) dans un ordinateur,
b) Reconnaissance de la nécessité de fabriquer un appareil dentaire de remplacement (3) pour une dent de la mâchoire supérieure ou de la mâchoire inférieure,
c) Analyse d'une découpe de la représentation 3D de la mâchoire supérieure ou de la mâchoire inférieure, qui contient au moins une partie de la dent (5) pour laquelle l'appareil dentaire de remplacement (3) doit être fabriqué,
d) Réalisation d'un marquage (5MS) pour le plan de fente (3SE) dans la découpe à l'aide du plan de référence (9),
e) Réalisation d'un modèle physique de la découpe avec le marquage (5MS),
f) Préparation d'un élément d'appareil contenant la fente (35), par exemple un corps d'appareil ou un appareil standard (2),
g) Ajustement de l'appareil dentaire de remplacement (2) au niveau du plan de la fente (3SE) et
h) Agencement d'un patin individualisé sur l'élément d'appareil, pour constituer l'appareil dentaire de remplacement (3).

2. Procédé selon la revendication 1, **caractérisé en ce que** l'étape 1a) englobe :
a) Réalisation d'un modèle sur mesure (11) de la mâchoire supérieure ou de la mâchoire inférieure d'un patient,
b) Définition d'un plan de fente (3SE) pour les dents (5) à traiter avec les appareils dentaires (1) de la mâchoire supérieure ou de la mâchoire inférieure,
c) Agencement des appareils dentaires (1) aux dents à traiter de la mâchoire supérieure ou de la mâchoire inférieure,
d) Définition du plan de référence (9) dans le modèle (11) par rapport au plan de fente,
e) Retrait des appareils dentaires (1) par rapport au modèle (11) et
f) Mémorisation électronique du modèle, y compris du plan de référence (9).

3. Procédé selon l'une des revendications précédentes, **caractérisé en ce que** l'étape 2a) est réalisée sur la base d'un modèle de plâtre ou d'un modèle virtuel de la mâchoire supérieure ou de la mâchoire inférieure.

4. Procédé selon l'une des revendications précédentes, **caractérisé en ce que** l'étape 2d) est réalisée avant l'étape 2c).

5. Procédé selon l'une des revendications précédentes, **caractérisé en ce qu'**à l'étape 2f) la mémorisation électronique consiste à numériser un modèle physique (11) ou bien à mémoriser un modèle numérisé.

6. Procédé selon l'une des revendications précédentes, **caractérisé en ce qu'**à l'étape 1f) l'élément d'appareil (2) est un élément d'appareil lingual ou buccal, pour fabriquer un appareil dentaire lingual ou un appareil dentaire buccal en guise d'appareil dentaire de remplacement (3).

7. Procédé selon l'une des revendications précédentes, **caractérisé en ce que** le plan de référence (9) à l'étape 1a) est représenté de manière continue, par exemple en suivant une ligne, ou de manière intermittente par exemple par des tirets au niveau de certaines dents (5).

8. Procédé selon l'une des revendications précédentes, **caractérisé en ce que** le plan de référence (9) à l'étape 1a) est défini comme identique pour toutes les dents, par exemple de 18 à 28, ou bien défini pour une zone particulière, par exemple de 13 à 23, et pour les autres zones, on définit simplement un décalage relatif, par exemple un affaissement ou une surélévation du plan de référence (9).

9. Procédé selon l'une des revendications précédentes, **caractérisé en ce que** le plan de référence (9) est défini avec une distance fixe, par exemple de 3 à 6 cm, par rapport au plan de fente (3SE) ou bien de manière individuelle, en particulier que le plan de référence est identique au plan de fente.

10. Procédé selon l'une des revendications précédentes, **caractérisé en ce que** la découpe d'intérêt à définir à l'étape 1c) comprend au moins une partie de la dent (5) et de préférence la dente (5), en particulier en outre une partie gingivale (5g), éventuellement en outre au moins une partie de la dente voisine mésiale et/ou distale, de préférence toute la dente, en particulier toujours en plus d'une partie gingivale.

11. Procédé selon l'une des revendications précédentes, **caractérisé en ce que** le marquage (5MS) est sous forme de ligne 2D ou de corps 3D, en particulier comme section de retenue (5H) pour la dent (5).

12. Procédé selon l'une des revendications précédentes, **caractérisé en ce que** le marquage (5MS) dans le cas d'une ligne 2D sur le tranche supérieure ou la tranche inférieure (205, 3US) d'une fente (35) est prévu sur le plan de fente (3SE) ou dans le cas d'un corps 3D à hauteur du plan de fente (3SE), où dans ce dernier cas, le corps 3D présente de préférence dans la direction occlusale-gingivale une épaisseur correspondant à la hauteur de la fente de l'appareil dentaire (1) dans cette direction.

13. Procédé selon l'une des revendications précédentes, **caractérisé en ce que** la section de retenue (SH) est linguale pour les appareils dentaires buccaux et qu'elle est buccale pour les appareils dentaires linguaux.

14. Procédé selon l'une des revendications précédentes, **caractérisé en ce que** la section de retenue (5H) à l'étape 1g) est reliée par un moyen de retenue technique.

15. Procédé selon l'une des revendications précédentes, **caractérisé en ce que** la fabrication du modèle à l'étape 1e) fait appel à une impression de la découpe à l'aide d'une imprimante 3D ou bien d'une machine à commande numérique ou d'une machine de prototypage rapide.

16. Procédé selon l'une des revendications précédentes, **caractérisé en ce que** la découpe à l'étape 1c) est définie manuellement ou automatiquement par exemple par logiciel.

17. Procédé selon l'une des revendications précédentes, **caractérisé en ce qu'**à l'étape 1h) le corps d'appareil dentaire est relié à un patin individualisé, par exemple l'appareil dentaire standard (2) est pourvue d'un patin individualisé, par exemple en comblant un espace entre la dent (5) et le patin de l'appareil dentaire standard (2) avec un matériau synthétique, que l'on va laisser durcir.

18. Procédé selon l'une des revendications précédentes, **caractérisé en ce que** l'on réalise à l'étape 1d) un marquage 2D, par exemple sous forme de ligne ou de points, permettant de définir la hauteur de fente et l'angulation de l'appareil dentaire correspondante (3).

19. Procédé selon l'une des revendications précédentes, **caractérisé en ce que** l'on réalise à l'étape 1d) un marquage 3D (SH), par exemple sous forme de tourillon, permettant de définit la hauteur de fente, l'angulation et le couple de l'appareil dentaire correspondant (3).

20. Procédé selon l'une des revendications précédentes, **caractérisé en ce que** l'on réalise à l'étape 1d) un marquage 3D (SH), en s'aidant d'au moins une condition limite d'appareil dentaire, par exemple sous forme de tourillon, permettant de définit la hauteur de fente, l'angulation, le couple et la rotation de l'appareil dentaire correspondant.

21. Procédé selon l'une des revendications précédentes, **caractérisé en ce qu'**une verticale sur un point médian de la bague sert de condition limite d'appareil dentaire, verticale par rapport à la fente, ou bien l'on utilise la position et la géométrie de la fente où la condition limite est mémorisée de préférence en plus de la représentation 3D préparée à l'étape 1a) de la mâchoire supérieure ou de la mâchoire inférieure.

22. Procédé selon l'une des revendications précédentes, **caractérisé en ce que** l'on produit une section de retenue (5H) en forme de tourillon en guise de marque, section de retenue présentant une surface latérale situé à hauteur de la tranche supérieure ou de la tranche inférieure (305, 3US) de la fente de l'appareil dentaire correspondant.
